# EUROPEAN PATENT SPECIFICATION

(11) **EP 2 138 808 B1**
(45) Date of publication and mention of the grant of the patent: **26.02.2014**
(21) Application number: 09162550.9
(22) Date of filing: 12.06.2009
(51) Int. Cl.: G01D 5/34

(54) **Photoelectric encoder**
Fotoelektrischer Kodierer
Codeur photoélectrique

(30) Priority: 13.06.2008 JP 2008155073
(43) Date of publication of application: 30.12.2009
(73) Proprietor: Mitutoyo Corporation, Kawasaki-shi, Kanagawa 213-8533 (JP)
(72) Inventor: Kaneko, Emi, Kanagawa 213-8533 (JP)
(74) Representative: Skone James, Robert Edmund

(56) References cited:
- EP-A2- 1 674 834
- JP-A- 8 005 326
- US-A- 5 424 829

## Description

### Technical Field

The present invention relates to a photoelectric encoder.

### Background Art

Conventionally, as an apparatus for detecting a relative movement position of a movable portion of an apparatus such as various machine tools, or measuring apparatuses, a photoelectric encoder is known (for example, see Patent Reference 1).

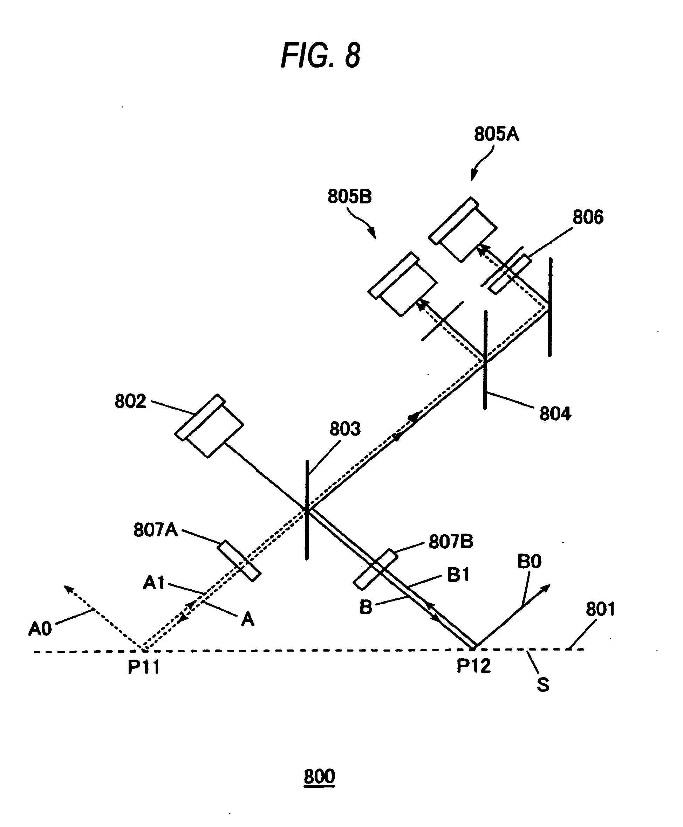

As a photoelectric encoder using a reflective diffraction grating, for example, a photoelectric encoder 800 shown in Fig. 8 is known.
In the photoelectric encoder 800, a laser beam emitted from a light source 802 is split into two beams in accordance with the polarization direction of a polarization beam splitter 803, and the split light fluxes A, B are incident on two different diffraction points P11, P12 on a reflective diffraction grating S of a scale 801, respectively, via quarter wave plates 807A, 807B. Primary diffracted light beams A1, B1 which are produced respectively in the diffraction points P11, P12 reversely advance in the same optical paths as the split light fluxes A, B to reach the polarization beam splitter 803 via the quarter wave plates 807A, 807B, and then mixed in the polarization beam splitter 803. Thereafter, the mixed light beam is split into two beams by a non-polarization beam splitter 804, and the beams are converted to electric signals by detectors 805A, 805B, respectively. On the other hand, reflection light beams (zero-order light beams) A0, B0 which are produced respectively in the diffraction points P11, P12 are eliminated in the left and right directions as viewed in the figure, respectively.

When the moving distance of the scale 801 is to be detected as changes between bright and dark of interference light, the photoelectric encoder 800 uses interference between the primary diffracted light beams A1, B1 which are phase shifted in opposite direction. When the scale 801 is displaced by a distance corresponding to one pitch of the diffraction grating S, complete sinusoidal signals φA, φB corresponding to two periods can be obtained from the detectors 805A, 805B (two changes between bright and dark are obtained). This means that one pitch of the diffraction grating S is optically divided by two, and hence the resolution can be improved. In the case where one pitch of the diffraction grating S is 0.5 µm, for example, the sinusoidal signals φA, φB obtained from the detectors 805A, 805B have a period corresponding to the resolution of 0.25 µm.
A quarter wave plate 806 is disposed for the one detector 805A. Therefore, the phases of the sinusoidal signals φA, φB obtained from the two detectors 805A, 805B are different from each other by 90 degrees. This allows the displacement direction of the scale 801 to be known.
[Patent Reference 1] JP-A-8-5326

However, the above-described photoelectric encoder has a problem in that the mechanism for detecting diffracted light beams reflected by the scale has a two-dimensional structure extending along the reflection direction, and hence the size of the photoelectric encoder is increased.

### Summary

It is an object of the invention to provide a photoelectric encoder which can be miniaturized.

In order to solve the problem, the invention provides a photoelectric encoder which includes:
a light source which emits a light beam;
a scale having a reflective diffraction grating which diffracts the light beam from the light source;
a mixing portion which mixes a plurality of diffracted light beams reflected from the scale;
a non-polarization beam splitter which splits the diffracted light beam mixed by the mixing portion, into a plurality of light beams;
a plurality of detectors each having: a polarizing plate which allows a corresponding one of the diffracted light beams split by the non-polarization beam splitter, to be transmitted through the polarizing plate; and a light receiving element which receives the diffracted light beam that are transmitted through the polarizing plate;
a quarter wave plate which is placed in one of the detectors, and which is disposed between the polarizing plate and the non-polarization beam splitter; and
a mirror which is placed on an optical path between the mixing portion and the non-polarization beam splitter, and which reflects the diffracted light beam from the mixing portion,
wherein the mirror reflects the diffracted light beam in a direction which is parallel to a plane of the scale, or in a direction which is directed to the plane of the scale.

Preferably,
the mirror is placed so as to reflect diffracted light beams of linear polarizations of 0° and 90° from the scale, as diffracted light beams of linear polarizations of 45° and 135°, and
the photoelectric encoder further includes an incidence half wave plate which is placed in an incidence side of the non-polarization beam splitter, and which allows the diffracted light beams of linear polarizations of 45° and 135° reflected from the mirror, to be transmitted through the incidence half wave plate.

Preferably,
the photoelectric encoder further includes an exit half wave plate which is placed in an exit side of the non-polarization beam splitter, and which allows the diffracted light beams which are passed through the non-polarization beam splitter, to be transmitted through the exit half wave plate.

The incidence half wave plate and the exit half wave plate may be integrally formed.

The mirror may include:
a first mirror which reflects the diffracted light beams from the mixing portion; and
a second mirror which reflects the diffracted light beams that are reflected by the first mirror, and that are transmitted through the incidence half wave plate, and
the incidence half wave plate, the second mirror, the non-polarization beam splitter, and the exit half wave plate are integrally formed.

According to the invention, the mirror which is placed on the optical path for a diffracted light beam between the mixing portion and the non-polarization beam splitter, and which reflects the diffracted light beam from the mixing portion, reflects the diffracted light beam in a direction which is parallel to the plane of the scale, or in a direction which is directed to the plane of the scale. Therefore, a mechanism for detecting diffracted light beams reflected by the scale can be formed to have a three-dimensional structure, and hence the miniaturization of the photoelectric encoder can be realized.

### Brief Description of the Drawings

[Fig. 1] Fig. 1 is a side view schematically showing a photoelectric encoder of Embodiment 1.
[Fig. 2] Fig. 2 is a plan view of the photoelectric encoder of Fig. 1.
[Fig. 3] Fig. 3 is a side view schematically showing a modification of the photoelectric encoder of Embodiment 1.
[Fig. 4] Fig. 4 is a diagram showing the configuration of main portions of a photoelectric encoder of Embodiment 2.
[Fig. 5] Fig. 5 is a diagram showing the configuration of main portions of a photoelectric encoder of Embodiment 3.
[Fig. 6] Fig. 6 is a diagram showing the configuration of main portions of a photoelectric encoder of Embodiment 4.
[Fig. 7] Fig. 7 is a diagram showing the configuration of main portions of a photoelectric encoder of Embodiment 5.
[Fig. 8] Fig. 8 is a side view schematically showing a conventional photoelectric encoder.

### Description of Reference Numerals and Signs

- 10: photoelectric encoder
- 11: scale
- 12: light source
- 13: polarization beam splitter
- 14: reflective optical system
- 141: first mirror
- 142: second mirror
- 143: non-polarization beam splitter
- 144: third mirror
- 15A, 15B: detector

### Best Mode for Carrying Out the Invention

Hereinafter, embodiments of the photoelectric encoder of the invention will be described with reference to the drawings.
In the following description, it is assumed that the longitudinal direction of a scale of a photoelectric encoder is the X direction, the direction perpendicular to the scale plane is the Z direction, and the direction perpendicular to the X and Z directions is the Y direction.

### [Embodiment 1]

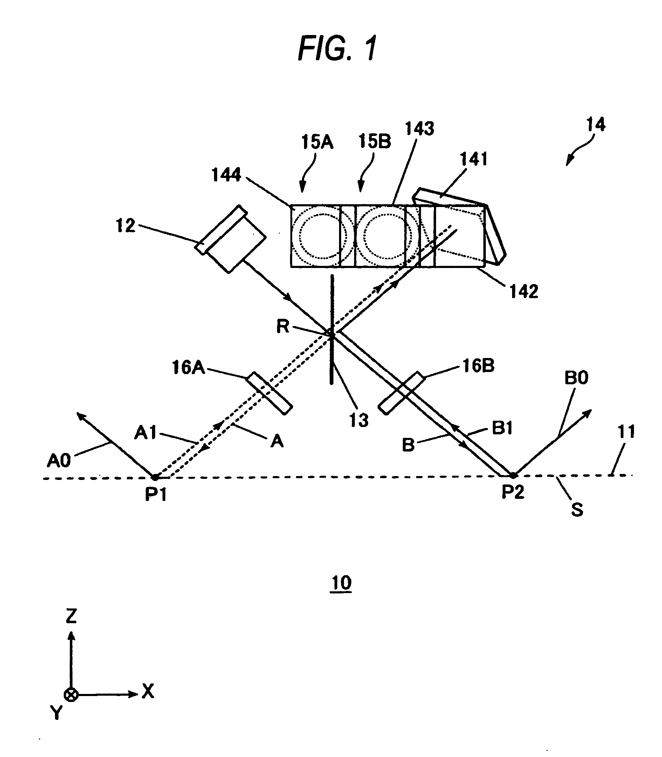

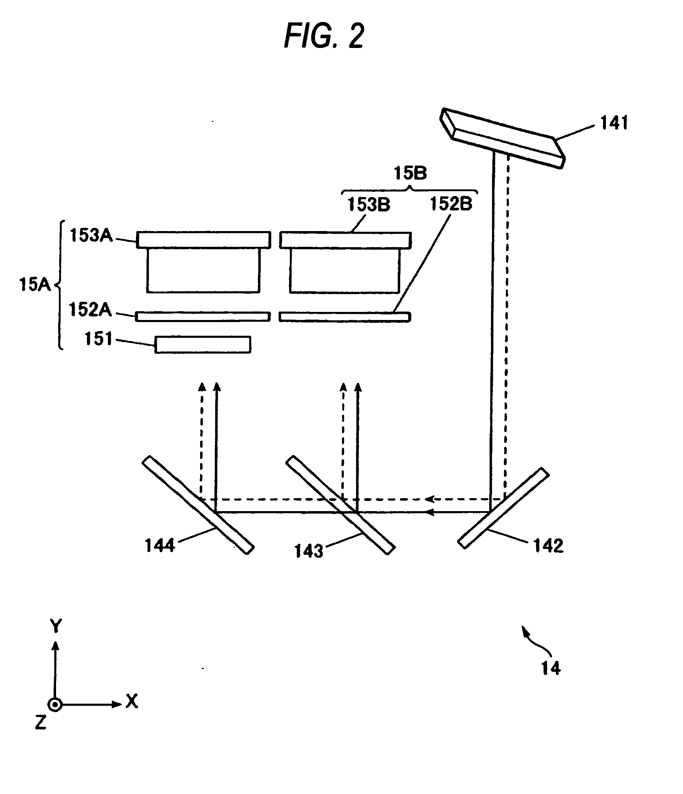

Fig. 1 is a side view schematically showing a photoelectric encoder 10 of the embodiment, and Fig. 2 is a plan view of the photoelectric encoder 10 shown in Fig. 1.

As shown in Fig. 1, the photoelectric encoder 10 includes a scale 11, a light source 12, a polarization beam splitter (hereinafter, abbreviated as PBS) 13, a reflective optical system 14, two detectors 15A, 15B, etc.

The scale 11 is, for example, configured by forming a reflective diffraction grating S of a predetermined pitch on a glass substrate.
The light source 12 is, for example, a laser light source which is disposed obliquely above the scale 11 in the Z direction so as to irradiate the scale 11 with a laser beam.
The PBS 13 is placed between the light source 12 and the scale 11, and perpendicularly to the scale 11 so as to split the laser beam from the light source 12 into two split light fluxes A, B the polarization directions of which are perpendicular to each other, and mix two primary diffracted light beams A1, B1 which are produced by diffracting the split light fluxes A, B on the diffraction grating S (diffraction points P1, P2) of the scale 11.

Specifically, a pair of quarter wave plates 16A, 16B are disposed in intermediate positions of two optical paths extending between a point R on the PBS 13 where the laser beam flux from the light source 12 is split, and the two different diffraction points P1, P2 on the scale 11 on which the split light fluxes A, B split at the point R are incident, respectively. The quarter wave plates 16A, 16B are placed while the direction of 45 degree phase lag is inclined with respect to the polarization directions of the split light fluxes A, B (linear polarization), and the direction is shifted by 90 degrees so that the phases of polarization components of perpendicular directions lag 90 degrees.

Therefore, the split light flux A and its primary diffracted light beam A1 are passed two times through the quarter wave plate 16A, and hence the phase of only one polarization component lags 180 degrees. As a result, the split light flux A (linear polarization) which has not been passed through the quarter wave plate 16A, and the primary diffracted light beam A1 (linear polarization) which has been passed through the quarter wave plate 16A are in a state where their polarization directions are rotated from each other by 90 degrees. The split light flux B and its primary diffracted light beam B1 have the same relationships, or the split light flux B (linear polarization) which has not been passed through the quarter wave plate 16B, and the primary diffracted light beam B1 (linear polarization) which has been passed through the quarter wave plate 16B are in a state where their polarization directions are rotated from each other by 90 degrees.
At the point R on the PBS 13, therefore, the primary diffracted light beam A1 is transmitted therethrough, and the primary diffracted light beam B1 is reflected thereby, so that one mixed wave which is oriented in a direction perpendicular to the direction toward the light source 12 is produced. Consequently, the PBS 13 functions as a mixing portion.

As shown in Fig. 2, the reflective optical system 14 includes a first mirror 141, a second mirror 142, a non-polarization beam splitter (hereinafter, abbreviated as NPBS) 143, a third mirror 144, etc.

Specifically, the first mirror 141 is disposed, for example, so as to be inclined by 45° with respect to the XZ and XY planes, whereby the mixed wave of the two primary diffracted light beams A1, B1 which have been mixed by the PBS 13 are reflected, and its optical path is changed to a direction oriented to the Y direction.
The second mirror 142 reflects the mixed wave of the two primary diffracted light beams A1, B1 reflected by the first mirror 141, in a direction which is the X direction, and along which the mixed wave approaches the light source 12.
The NPBS 143 is placed so as to split the mixed wave of the two primary diffracted light beams A1, B1 reflected by the first mirror 141 and the second mirror 142, into two light beams without changing their polarization directions. One of the split mixed waves is sent to the detector 15A through the third mirror 144, and the other mixed wave is sent to the detector 15B.

The detector 15A is configured by: a quarter wave plate 151 which causes the phase of only one polarization component of the one mixed wave split by the NPBS 143, to lag 90 degrees; a polarizing plate 152A which makes the polarization directions of the mixed wave that is passed through the quarter wave plate 151, to coincide with each other, thereby causing interference; and a light receiving element 153A which converts the light fluxes that are caused by the polarizing plate 152A to interfere with each other, to an electric signal.
The detector 15B is configured by: a polarizing plate 152B which makes the polarization directions of the other mixed wave split by the NPBS 143, to coincide with each other, thereby causing interference; and a light receiving element 153B which converts the light fluxes that are caused by the polarizing plate 152B to interfere with each other, to an electric signal.
Therefore, the phase of the one mixed wave split by the NPBS 143 is made by the quarter wave plate 151 to lag 90 degree with respect to the other mixed wave, the polarization directions of the mixed wave are then made by the polarizing plate 152A, coincident with each other to cause interference, and thereafter the mixed wave is incident on the light receiving element 153A.
The polarization directions of the other mixed wave are made by the polarizing plate 152B, coincident with each other to cause interference, and thereafter the mixed wave is incident on the light receiving element 153B.
Therefore, the phases of the sinusoidal signals φA, φB obtained from the two detectors 15A, 15B are different from each other by 90 degrees.

According to the thus configured photoelectric encoder 10, the moving distance of the scale 11 is detected in the following manner.
First, the laser beam emitted from the light source 12 is split on the position R into the S-wave and the P-wave in accordance with the polarization direction of the PBS 13. The split light fluxes A, B are passed through the quarter wave plates 16A, 16B, and then incident on the two different diffraction points P1, P2 on the diffraction grating S of the scale 11, respectively. In this case, the primary diffracted light beams A1, B1 and reflection light beams (zero-order light beams) A0, B0 of the split light fluxes A, B are produced at the diffraction points P1, P2, respectively.
Next, the primary diffracted light beams A1, B1 reversely advance in the same optical paths as those along which the split light fluxes A, B reach the diffraction points P1, P2, to be passed through the quarter wave plates 16A, 16B, and reach the PBS 13 (the point R). Then, the transmitted light of the primary diffracted light beam A1 and the reflected light of the primary diffracted light beam B1 are mixed by the PBS 13.

Next, the mixed wave emitted from the PBS 13 is reflected by the first mirror 141 so that the optical path is changed into the XY plane which is parallel to the plane of the scale 11.
Specifically, the optical path which is in the XZ plane perpendicular to the plane of the scale 11 is changed into the XY plane which is parallel to the plane of the scale 11, by the first mirror 141 which is disposed with being inclined by 45°.
Next, the light beam the optical path of which is changed by the first mirror 141 is incident on the NPBS 143 through the second mirror 142, and split into two light beams by the NPBS 143. One of the light beams is incident on the detector 15B, and the other light beam is incident on the detector 15A through the third mirror 144. Thereafter, the light beams are converted to electric signals by the detectors 15A, 15B.
On the other hand, the zero-order light beams A0, B0 are eliminated in the X direction at the positions of the diffraction points P1, P2, respectively.

As described above, the photoelectric encoder 10 of the embodiment includes the reflective optical system 14 which changes the optical path of the light beam emitted from the PBS 13, between the PBS 13 and the detectors 15A, 15B. Therefore, the light beam which is reflected by the first mirror 141 and second mirror 142 of the reflective optical system 14 is reflected in the XY plane which is parallel to the plane of the scale 11, and hence the optical path having a three-dimensional structure is configured, so that the photoelectric encoder 10 can be miniaturized in the Z direction.

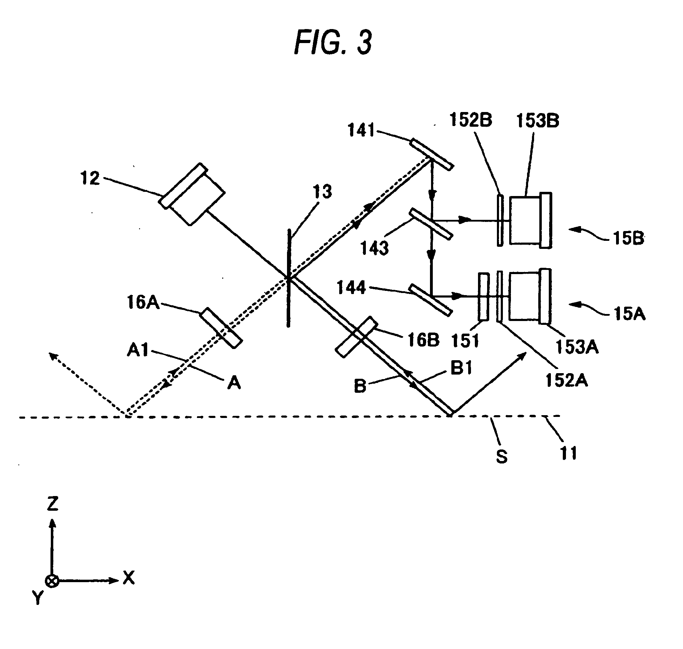

In the embodiment, the first mirror 141 is disposed so as to be inclined by 45° with respect to the XZ and XY planes. However, the disposition angle of the first mirror 141 is not particularly restricted as far as the optical path of the light beam reflected by the first mirror 141 is changed to be parallel to the plane of the scale 11 or in the direction directed to the plane of the scale 11.
Although the reflective optical system 14 is configured by the first mirror 141, the second mirror 142, the NPBS 143, and the third mirror 144, optical components constituting the reflective optical system 14 are adequately set.
As shown in Fig. 3, for example, the first mirror 141 may be placed so as to be inclined by 45° with respect to only the XY plane, and the light beam reflected by the first mirror 141 may travel in an optical path perpendicular to the scale 11. In this case, the light beam may be split by the NPBS 143 without using the second mirror 142.

### [Embodiment 2]

Next, Embodiment 2 of the invention will be described.
A photoelectric encoder 20 of Embodiment 2 is identical in basic configuration to the photoelectric encoder 10 of Embodiment 1 other than that a reflective optical system 24 is configured in a different manner. Therefore, the following description will be made with focusing the system, the identical components are denoted by the same reference numerals as Embodiment 2, and their description is omitted.

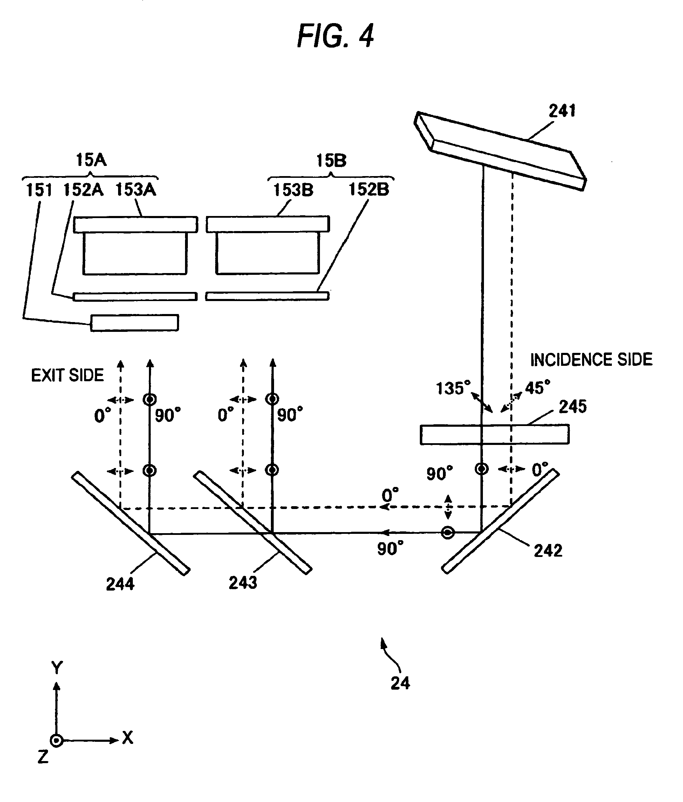

Fig. 4 is a diagram showing the reflective optical system 24 of the photoelectric encoder 20 of Embodiment 2.
The reflective optical system 24 includes a first mirror 241, a second mirror 242, an NPBS 243, a third mirror 244, an incidence half wave plate 245, etc.
As shown in Fig. 4, specifically, the incidence half wave plate 245 is disposed in an optical path between the first mirror 241 and the second mirror 242 so that diffracted light beams of linear polarizations of 45° and 135° which are reflected from the first mirror 241 are incident on the incidence half wave plate 245.

According to the configuration, light beams in which linear polarizations of 0° and 90° are once transformed to those of 45° and 135° by transmission through the first mirror 241 that is disposed so as to be inclined by 45° with respect to the XZ and XY planes are transmitted through the incidence half wave plate 245, thereby allowing the light beams of linear polarizations of 45° and 135° to be emitted as light beams of linear polarizations of 0° and 90°.

As described above, according to the photoelectric encoder 20 of Embodiment 2, it is a matter of course that the same effects as those of Embodiment 1 can be attained. Moreover, linear polarizations of 45° and 135° which are produced as a result of transmission through the first mirror 141 can be returned to those of 0° and 90°, and hence it is possible to prevent the extinction ratio from being impaired. Therefore, the optical property can be maintained to a satisfactory level.
According to the configuration, even when it is configured so that, after reflection by the first mirror 241, reflection is repeated plural times, the extinction ratio can be prevented from being impaired. Therefore, the degree of freedom in design can be improved.
Since diffracted light which is reflected by the first mirror 241 is transmitted through the incidence half wave plate 245, an error in measurement accuracy depending on the materials of the optical components and optical thin films, and characteristics such as front face reflection and rear face reflection can be reduced.

### [Embodiment 3]

Next, Embodiment 3 of the invention will be described.

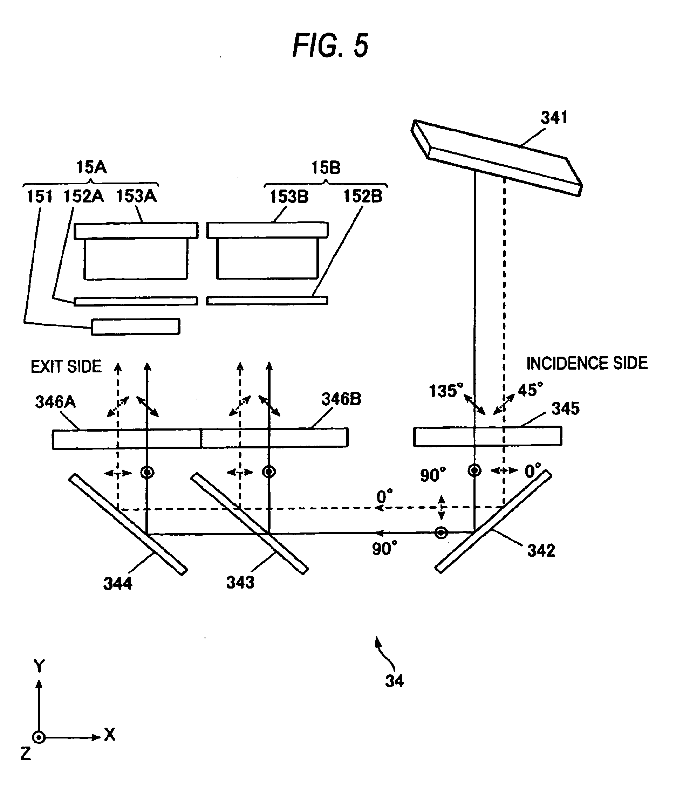

Fig. 5 is a diagram showing a reflective optical system 34 of a photoelectric encoder 30 of Embodiment 3.
The reflective optical system 34 includes a first mirror 341, a second mirror 342, an NPBS 343, a third mirror 344, an incidence half wave plate 345, exit half wave plates 346A, 346B, etc.

Specifically, in a similar manner as Embodiment 2, the incidence half wave plate 345 is disposed in an optical path between the first mirror 341 and the second mirror 342, and the exit half wave plates 346A, 346B which allow a light beam passed through the NPBS 343 to be passed through the exit half wave plates 346A, 346B are disposed in front of the two detectors 15A, 15B, respectively.
According to the configuration, diffracted light beams which are passed through the incidence half wave plate 345 to be formed as diffracted light beams of linear polarizations of 0° and 90° are passed through the exit half wave plates 346A, 346B to be returned to light beams of linear polarizations of 45° and 135°. Therefore, deviation in phase which is caused in installation of the incidence half wave plate 345 (for example, linear polarizations of 0° and 90° are set to 1° and 89°) are offset by the exit half wave plates 346A, 346B.

As described above, according to the photoelectric encoder 30 of Embodiment 3, it is a matter of course that the same effects as those of Embodiments 1 and 2 can be attained. Moreover, the incidence half wave plate 345 and the exit half wave plates 346A, 346B are disposed in front and rear of the incidence on the NPBS 343, and hence phase shifts due to dispersion in production and assembly of the components can be offset. Therefore, the accuracy can be further improved.

### [Embodiment 4]

Next, Embodiment 4 of the invention will be described.

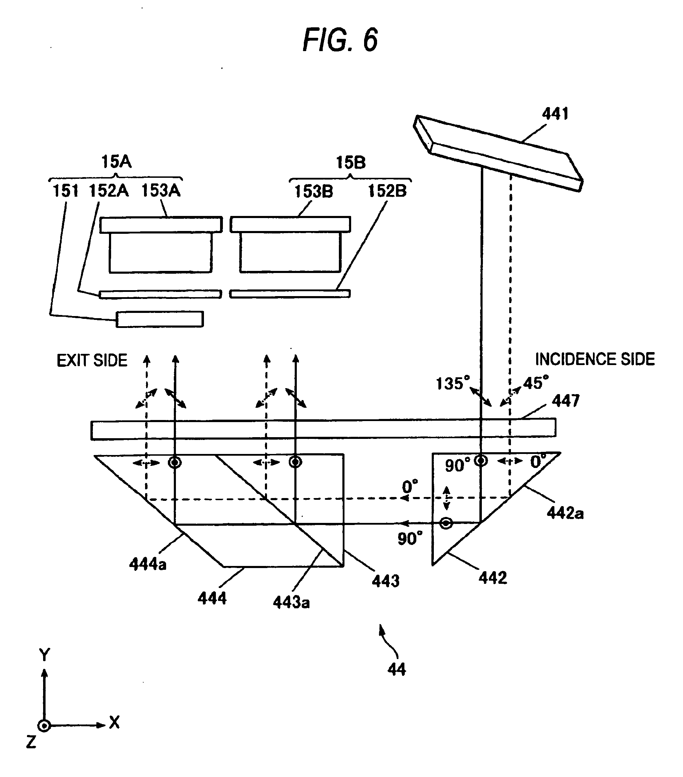

Fig. 6 is a diagram showing a reflective optical system 44 of a photoelectric encoder 40 of Embodiment 4.
The reflective optical system 44 includes a first mirror 441, an optical component 442 constituting a second mirror (hereinafter, referred to simply as the optical component 442), an optical component 443 constituting an NPBS (hereinafter, referred to simply as the optical component 443), an optical component 444 constituting a third mirror (hereinafter, referred to simply as the optical component 444), a half wave plate 447, etc.
In the optical components 442, 443, 444, namely, the second mirror 342, NPBS 343, and third mirror 344 in the reflective optical system 34 of Embodiment 3 are formed by the triangular columnar optical components 442, 443, and the square columnar optical component 444, respectively.
In the embodiment, "optical component" means, for example, a prism.
Specifically, for example, the optical components 442, 444 can be configured by forming a mirror face on slopes 442a, 444a of transparent glass members having a triangular or square columnar shape, and the optical component 443 can be configured by forming an NPBS on a slope of a transparent glass member having a triangular columnar shape.
In the half wave plate 447, the incidence half wave plate 345 and the exit half wave plates 346A, 346B in the reflective optical system 34 of Embodiment 3 are integrally formed.
Therefore, the optical property of the reflective optical system 44 is identical with that of the reflective optical system 34 of Embodiment 3.

As described above, according to the photoelectric encoder 40 of Embodiment 4, it is a matter of course that the same effects as those of Embodiments 1 to 3 can be attained. Moreover, the half wave plate 447 is configured by a single member, and hence a phase difference is not caused in production and assembly of components. Therefore, the accuracy can be further improved.
Even when the ambient air temperature is changed, the phase relationships are not disturbed because the half wave plate 447 is configured by a single member, and hence the optical property can be maintained at a constant level.

### [Embodiment 5]

Next, Embodiment 5 of the invention will be described.

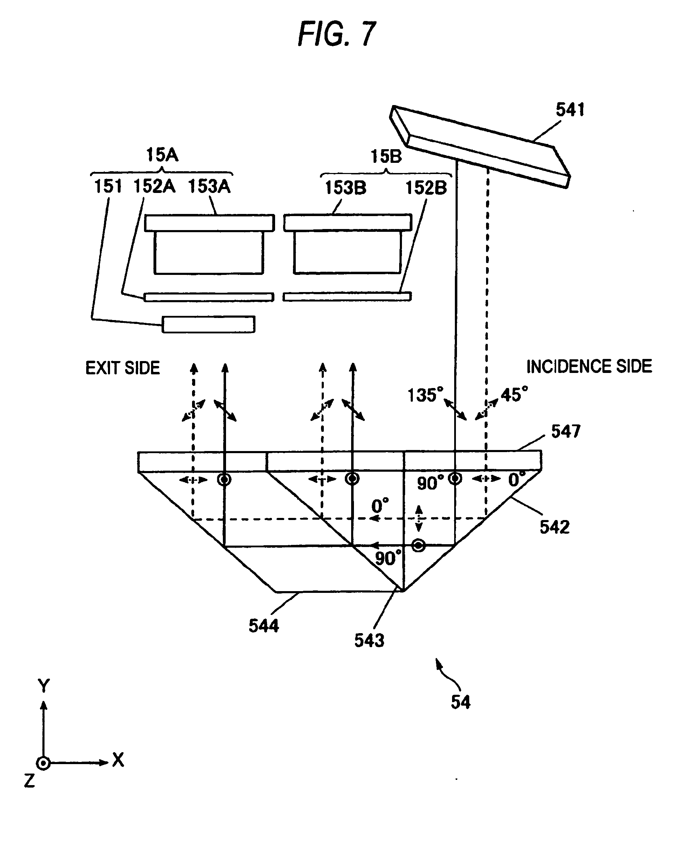

Fig. 7 is a diagram showing a reflective optical system 54 of a photoelectric encoder 50 of Embodiment 5.
Similarly with the reflective optical system 44 of Embodiment 4, the reflective optical system 54 includes a first mirror 541, optical components 542, 543, 544, a half wave plate 547, etc. The optical components 542, 543, 544 and the half wave plate 547 are integrally formed.
Specifically, these components can be integrated by bonding with one another.

As described above, according to the photoelectric encoder 50 of Embodiment 5, it is a matter of course that the same effects as those of Embodiments 1 to 4 can be attained. Moreover, the optical components 542, 543, 544 and the half wave plate 547 are integrally formed, and hence the optical property can be further stabilized.

The invention is not restricted to the above-described embodiments.
For example, the PBS 13 is used as the mixing portion. Alternatively, a splitting portion which splits the light beam from the light source 12 may be configured as a member which is separated from the PBS 13.
Each of the non-polarization beam splitters 143, 243, ..., 543 may be configured so as to split the light beam into two or more optical paths and have detectors the number of which is equal to that of the optical paths.

## Claims

1. A photoelectric encoder comprising:
a light source which emits a light beam;
a scale having a reflective diffraction grating which diffracts the light beam from said light source;
a mixing portion which mixes a plurality of diffracted light beams reflected from said scale;
a non-polarization beam splitter which splits the diffracted light beam mixed by said mixing portion, into a plurality of light beams;
a plurality of detectors each having: a polarizing plate which allows a corresponding one of the diffracted light beams split by said non-polarization beam splitter, to be transmitted through said polarizing plate; and a light receiving element which receives the diffracted light beam that are transmitted through said polarizing, plate;
a quarter wave plate which is placed in one of said detectors, and which is disposed between said polarizing plate and said non-polarization beam splitter; and
a mirror which is placed on an optical path between said mixing portion and said non-polarization beam splitter, and which reflects the diffracted light beam from said mixing portion,
wherein said mirror reflects the diffracted light beam in a direction which is parallel to a plane of said scale, or in a direction which is directed to the plane of said scale.

2. A photoelectric encoder according to claim 1, wherein
said mirror is placed so as to reflect diffracted light beams of linear polarizations of 0° and 90° from said scale, as diffracted light beams of linear polarizations of 45° and 135°, and
wherein said photoelectric encoder further comprises:
an incidence half wave plate which is placed in an incidence side of said non-polarization beam splitter, and which allows the diffracted light beams of linear polarizations of 45° and 135° reflected from said mirror, to be transmitted through said incidence half wave plate.

3. A photoelectric encoder according to claim 1 or claim 2, further comprising:
an exit half wave plate which is placed in an exit side of said non-polarization beam splitter, and which allows the diffracted light beams which are passed through said non-polarization beam splitter, to be transmitted through said exit half wave plate.

4. A photoelectric encoder according to claim 3, wherein
said incidence half wave plate and said exit half wave plate are integrally formed.

5. A photoelectric encoder according to any one of claims 2 to 4, wherein
said mirror includes:
a first mirror which reflects the diffracted light beams from said mixing portion; and
a second mirror which reflects the diffracted light beams that are reflected by said first mirror, and that are transmitted through said incidence half wave plate, and
wherein said incidence half wave plate, said second mirror, said non-polarization beam splitter, and said exit half wave plate are integrally formed.

## Patentansprüche

1. Photoelektrischer Codierer, der aufweist:
eine Lichtquelle, die einen Lichtstrahl emittiert;
eine Skala mit einem reflektierenden Diffraktionsgitter, das den Lichtstrahl von der Lichtquelle ablenkt;
einen Mischteil, der eine Vielzahl von abgelenkten Lichtstrahlen mischt, die von der Skala reflektiert werden;
einen Nicht-Polarisationsstrahlteiler, der den abgelenkten Lichtstrahl, der von dem Mischteil gemischt wird, in eine Vielzahl von Lichtstrahlen teilt;
eine Vielzahl von Detektoren, die jeweils aufweisen: eine Polarisationsplatte, die ermöglicht, dass ein entsprechender der abgelenkten Lichtstrahlen, die von dem Nicht-Polarisationsstrahlteiler geteilt werden, durch die Polarisationsplatte übertragen wird; und ein Lichtempfangselement, das den abgelenkten Lichtstrahl empfängt, der durch die Polarisationsplatte übertragen wird;
eine Viertelwellenplatte, die in einem der Detektoren platziert ist und die zwischen der Polarisationsplatte und dem Nicht-Polarisationsstrahlteiler angeordnet ist; und
einen Spiegel, der auf einem optischen Pfad zwischen dem Mischteil und dem Nicht-Polarisationsstrahlteiler platziert ist und der den abgelenkten Lichtstrahl von dem Mischteil reflektiert,
wobei der Spiegel den abgelenkten Lichtstrahl in eine Richtung reflektiert, die parallel zu einer Ebene der Skala ist, oder in eine Richtung, die auf die Ebene der Skala gerichtet ist.

2. Ein photoelektrischer Codierer gemäß Anspruch 1, wobei
wobei der Spiegel derart platziert ist, um abgelenkte Lichtstrahlen mit linearen Polarisationen von 0° und 90° von der Skala als abgelenkte Lichtstrahlen mit linearen Polarisationen von 45° und 135° zu reflektieren, und
wobei der photoelektrische Codierer weiter aufweist:
eine Einfalls-Halbwellenplatte, die an einer Einfallsseite des Nicht-Polarisationsstrahlteilers platziert ist und die ermöglicht, dass die abgelenkten Lichtstrahlen mit linearen Polarisationen von 45° und 135°, die von dem Spiegel reflektiert werden, durch die Einfalls-Halbwellenplatte übertragen werden.

3. Ein photoelektrischer Codierer gemäß Anspruch 1 oder Anspruch 2, der weiter aufweist:
eine Austritts-Halbwellenplatte, die an einer Austrittsseite des Nicht-Polarisationsstrahlteilers platziert ist und die ermöglicht, dass die abgelenkten Lichtstrahlen, die durch den Nicht-Polarisationsstrahlteiler gehen, durch die Austritts-Halbwellenplatte übertragen werden.

4. Ein photoelektrischer Codierer gemäß Anspruch 3, wobei die Einfalls-Halbwellenplatte und die Austritts-Halbwellenplatte integral ausgebildet sind.

5. Ein photoelektrischer Codierer gemäß einem der Ansprüche 2 bis 4, wobei der Spiegel umfasst:
einen ersten Spiegel, der die abgelenkten Lichtstrahlen von dem Mischteil reflektiert; und
einen zweiten Spiegel, der die abgelenkten Lichtstrahlen reflektiert, die durch den ersten Spiegel reflektiert werden und die durch die Einfalls-Halbwellenplatte übertragen werden, und
wobei die Einfalls-Halbwellenplatte, der zweite Spiegel, der Nicht-Polarisationsstrahlteiler und die Austritts-Halbwellenplatte integral ausgebildet sind.

## Revendications

1. Encodeur photoélectrique comprenant :
une source de lumière qui émet un faisceau de lumière ;
une échelle ayant un réseau de diffraction réfléchissant qui diffracte le faisceau de lumière provenant de ladite source de lumière ;
une partie de mélange qui mélange une pluralité de faisceaux de lumière diffractés réfléchis par ladite échelle ;
un diviseur de faisceau de non-polarisation qui divise le faisceau de lumière diffracté mélangé par ladite partie de mélange, en une pluralité de faisceaux de lumière ;
une pluralité de détecteurs ayant chacun : une plaque de polarisation qui permet à un faisceau correspondant des faisceaux de lumière diffractés divisés par ledit diviseur de faisceau de non-polarisation d'être transmis à travers ladite plaque de polarisation ; et un élément de réception de lumière qui reçoit les faisceaux de lumière diffractés qui sont transmis à travers ladite plaque de polarisation ;
une lame quart d'onde qui est placée dans un desdits détecteurs, et qui est disposée entre ladite plaque de polarisation et ledit diviseur de faisceau de non-polarisation ; et
un miroir qui est placé sur un chemin optique entre ladite partie de mélange et ledit diviseur de faisceau de non-polarisation, et qui réfléchit le faisceau de lumière diffracté par ladite partie de mélange,
dans lequel ledit miroir réfléchit le faisceau de lumière diffracté dans une direction qui est parallèle à un plan de ladite échelle, ou dans une direction qui est dirigée vers le plan de ladite échelle.

2. Encodeur photoélectrique selon la revendication 1, dans lequel
ledit miroir est placé de façon à réfléchir des faisceaux de lumière diffractés de polarisations linéaires de 0° et 90° par ladite échelle, en tant que faisceaux de lumière diffractés de polarisations linéaires de 45° et 135°, et
dans lequel ledit encodeur photoélectrique comprend en outre :
une lame demi-onde d'incidence qui est placée dans un côté d'incidence dudit diviseur de faisceau de non-polarisation, et qui permet aux faisceaux de lumière diffractés de polarisations linéaires de 45° et 135° réfléchis par ledit miroir, d'être transmis à travers ladite lame demi-onde d'incidence.

3. Encodeur photoélectrique selon la revendication 1 ou la revendication 2, comprenant en outre :
une lame demi-onde de sortie qui est placée dans un côté sortie dudit diviseur de faisceau de non-polarisation, et qui permet aux faisceaux de lumière diffractés qui passent à travers ledit diviseur de faisceau de non-polarisation, d'être transmis à travers ladite lame demi-onde de sortie.

4. Encodeur photoélectrique selon la revendication 3, dans lequel
ladite lame demi-onde d'incidence et ladite lame demi-onde de sortie sont formées solidairement.

5. Encodeur photoélectrique selon l'une quelconque des revendications 2 à 4, dans lequel ledit miroir comprend :
un premier miroir qui réfléchit les faisceaux de lumière diffractés par ladite partie de mélange ; et
un second miroir qui réfléchit les faisceaux de lumière diffractés qui sont réfléchis par ledit premier miroir, et qui sont transmis à travers ladite lame demi-onde d'incidence, et
dans lequel ladite lame demi-onde d'incidence, ledit second miroir, ledit diviseur de faisceau de non-polarisation et ladite lame demi-onde de sortie sont formés solidairement.
